# EUROPEAN PATENT SPECIFICATION

(11) **EP 3 952 629 B1**
(45) Date of publication and mention of the grant of the patent: **07.06.2023**
(21) Application number: 20719507.4
(22) Date of filing: 06.04.2020
(51) Int. Cl.: A01B 23/02, A01B 35/22, A01B 39/22

(54) **UTENSIL FOR AGRICULTURAL WORKING**
UTENSIL ZUR LANDWIRTSCHAFTLICHEN BEARBEITUNG
USTENSILE POUR TRAVAIL AGRICOLE

(30) Priority: 11.04.2019 IT 201900005628
(43) Date of publication of application: 16.02.2022
(73) Proprietor: Torrico S.r.l., 36053 Gambellara (VI) (IT)
(72) Inventor: PEGORARO, Luciano, 36053 Gambellara (VI) (IT)
(74) Representative: Burchielli, Riccardo
(86) International application number: PCT/IT2020/050089
(87) International publication number: WO 2020/208664

(56) References cited:
- GB-A- 2 209 651
- US-A- 3 773 114
- US-A1- 2018 288 929
- US-B2- 8 770 311

## Description

The present invention falls within the scope of farming tools and utensils and equipment for working the soil. The invention in particular refers to farming utensils comprising a tool for working the soil and a support element which can be fastened to a farm vehicle, where such support element can be disconnected from the vehicle itself.

It is common practice in agriculture to use farming apparatuses generically defined as cultivators; such class of tools includes among others, ploughs, spiked harrows, subsoil ploughs, etc.

Such tools comprise a plurality of work elements fastened to a support frame of the movable farm vehicle, for example a tractor, and prepared to perform the soil working procedures such as ploughing the subsoil, ploughing, cultivating, minimum tillage, etc.

The frame of said tools can be fastened to and directly supported by the tractor or can be dragged thereby, for example by means of wheels.

The working tools can have various shapes and sizes based on the tasks to be performed, and they are fastened to support elements generally having an elongated and/or curved shape, called spring-loaded tines, which in turn are connected to the support frame.

A farming apparatus, or cultivator, comprises a support frame provided with a plurality of aligned or offset spring-loaded tines, each fastened to a work tool.

The work tools can also be disassembled to be replaced with new tools due to wear or damage, or with different tools when the farmer requires performing different operations on different soil.

For this reason, the work tools are reversibly fastened to a connecting end of the support element, for example by means of screws or bolts. However, due to scale, rust, dirt, soil, etc., the fastening means can become locked, making the release operation longer and more difficult, especially if the cultivator comprises several spring-loaded tines, each with the respective work tool. Without considering this, the farmer in any case is to arrange adequate means for removing the fastening devices of the work tools; moreover, if bolts or the like are involved, the same can be lost too easily once they are removed.

A utensil for agricultural working having the technical features which can be considered the closest prior art to the following invention, features which are present in the preamble to appended claim 1, are described for example in patent documents US2018/288929A1, US8770311B2, US3773114A, GB2209651A.

To circumvent these drawbacks, farming work devices were conceived comprising an adaptor fastened by means of bolts to a free end of the support element and configured to be engaged by a leg or stem of the agricultural working machine.

The tool can be assembled on the adaptor and locked in working position. For this purpose and in order to ensure the farming tool is not disengaged from the adaptor during the work, specific locking means which mutually fasten the tool and the adaptor are provided.

The aforesaid devices allow simplifying and accelerating the assembly/disassembly procedures of the tools to/from the spring-loaded tines, but they too have certain drawbacks. Indeed, the locking means can remain locked due to scale, rust, dirt, soil, etc. and prevent the tool from being released from the adaptor. In the same way, the leg can remain wedged and locked to the adaptor.

The aims of the invention include:
- improving the known agricultural work devices comprising a work tool and a support element which can be fastened to a frame of a farm vehicle, which can be reversibly coupled to each other;
- making an agricultural work device which allows assembling or disassembling a farm working tool to/from the corresponding support element, for example a spring-loaded tine, more easily and quickly;
- making an agricultural work device which in any case can be associated with a farm apparatus or cultivator and which has a sturdy structure and a simple and reliable operation.

These and other aims are achieved by an agricultural work device according to appended claim 1; further technical details and features are indicated in the dependent claims.

The invention can be better understood and implemented with reference to the accompanying drawings illustrating, by way of non-limiting example, some embodiments of the farm utensil, wherein:
- figures 1A, 1B, 1C and 1D are perspective views of the agricultural work device of the invention during the assembly and disassembly step;
- figures 2A to 2F are the side views of the assembled device;
- figures 3 and 4 are the sections of details of figures 1A to 2F;
- figure 4 shows a detail of the fastening device according to the invention;
- figure 5 shows different embodiments of the utensil according to the invention.

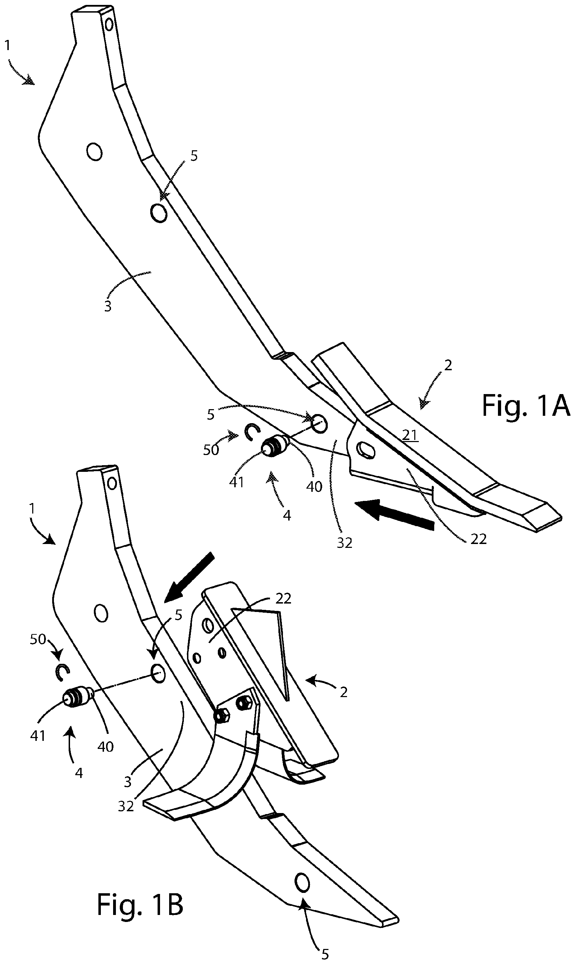

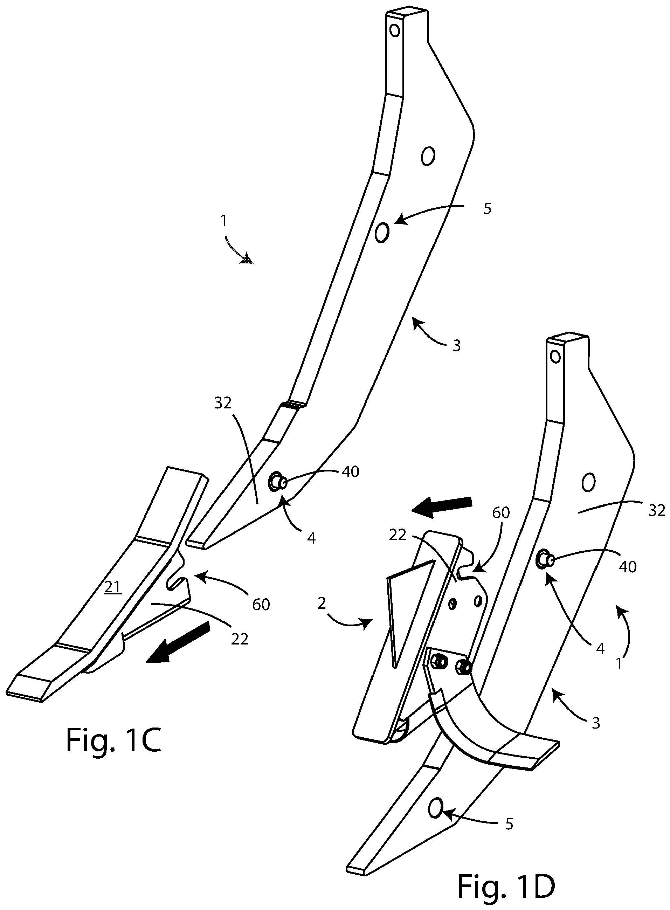

With reference to figures 1A to 2F, they illustrate a utensil for farm machines 1 for working the soil which can be associated with a movable farm machine (not shown) and comprising a work tool 2 arranged to interact with the soil and a support element 3 which can be fastened to the farm machine and supported by the work tool 2.

The embodiment described and illustrated in the accompanying drawings in particular indicates a subsoiler, or scarifier, adapted to break up the more or less deep layers of the soil; however, the device the object of the present invention can advantageously be used for fastening different utensils such as, for example, a hoe, harrow, or any other farm tool adapted to work or interact with the soil.

The work tool 2 advantageously comprises a working area 21, or operating portion, which is adapted to interact with the soil, and a connecting portion 22, or shaped area, for the removable connection with the support element 3.

In the embodiment illustrated in the drawings, the support element 3 is made in a single piece and comprises holes, or openings 5, adapted to connect the work tool 2 to the support element 3, and therefore to the farm machine, by means of the insertion of a fastening device 4.

The work tool 2 and the support element 3 advantageously can be coupled to each other by means of the respective shaped areas 22 and 32, which are complementary to each other, as detailed in figures 1A to 2F.

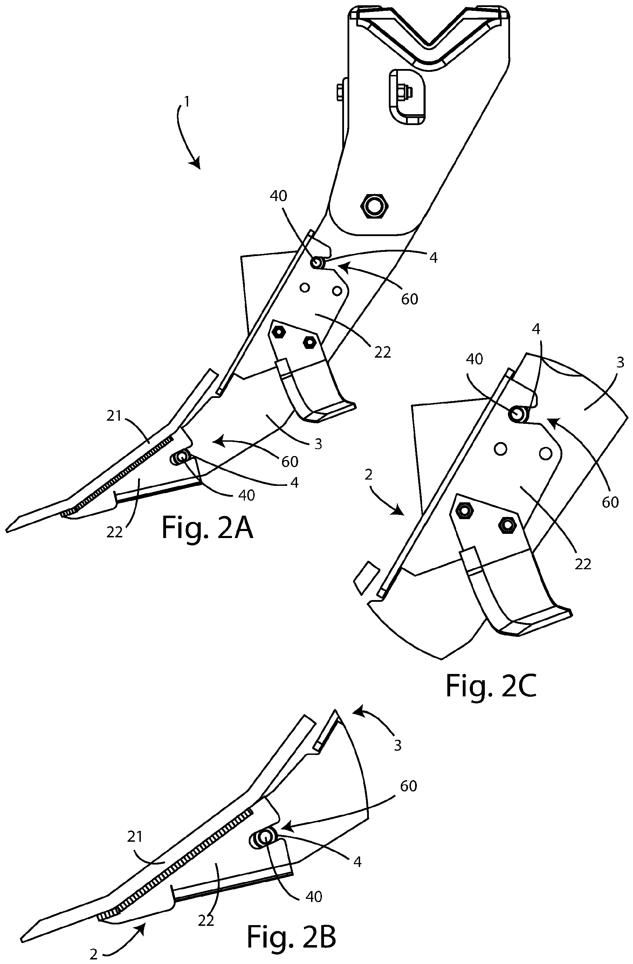

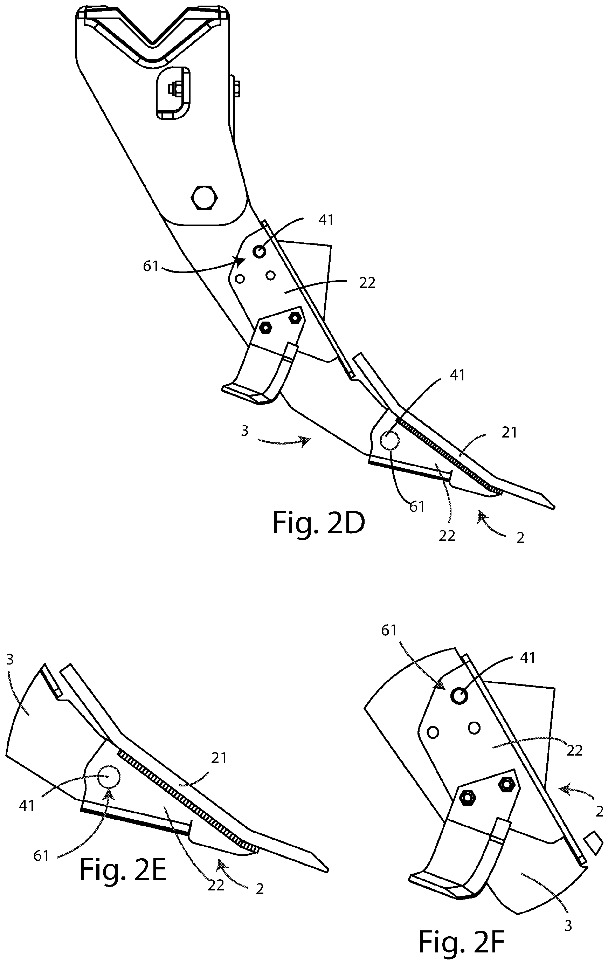

The operation of the fastening device 4 and the interaction thereof with the elements 2 and 3 can be better understood with the aid of the side views of figures 2A and 2F.

They show a possible embodiment of the farm utensil 1 with the fastening device 4 in assembled configuration, and in particular with two subsoiler tools assembled.

The feature of the fastening device 4 is that, both in the assembled configuration and in the disassembled one, it always remains inserted in the opening 5 and it is capable of moving from an engaged position to a non-engaged one by means of simply sliding in the opening 5. The sliding is obtained by the farmer who acts only on the fastening device 4 by means of suitable tools, such as for example hammers or mallets.

The fastening device 4 therefore always remains accommodated in the opening 5 and is built in such a manner that one of the two ends thereof, the stem 40 or the head 41, advantageously projects from the opening 5 according to whether or not the work tool 2 is to be released or locked, respectively, from/onto the support element 3.

The work tool 2 advantageously is made with abutment surfaces 60 and 61 which can therefore allow the positioning or removal thereof, respectively, to/from the support element 3, or the locking thereon.

Said abutment surfaces 60 and 61 have differences: surface 60 advantageously can be slot-shaped or simply have a profile which serves as abutment for the device 4 to allow the insertion and the removal of the tool 2 by sliding on the support element 3, also when the stem 40 projects from the opening 5 and is in the released position; surface 61 instead is designed so as to allow the sliding of tool 2 only when the head 41 of the fastening device 4 does not project from opening 5, and therefore when the same device 4 is in the released position.

Summarizing, the surfaces 60 and 61, obtained on the opposite sides of the work tool 2, make it possible for said fastening device 4 to pass from a locked position, according to which said head 41 abuts on surface 61, to a released position, according to which said stem 40 abuts on the second surface 60, and vice versa.

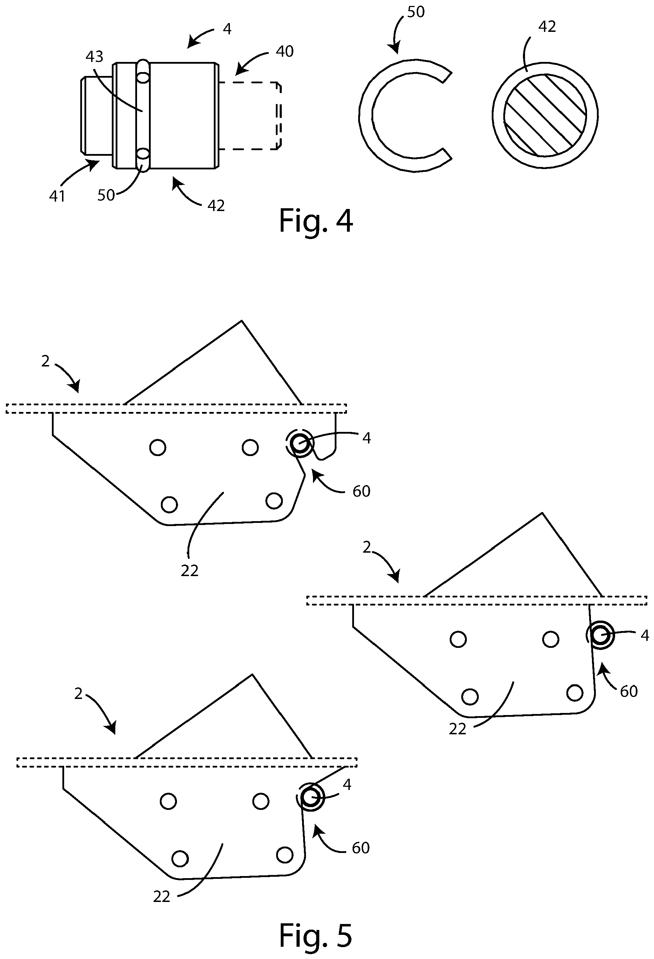

Figure 4 details the construction components of the fastening device 4. In a preferred embodiment, said device 4 can be a pin made for example, of steel, having a central body 42 with a greater diameter with respect to the ends, which consist of the stem 40 and the head 41; this is so that said pin advantageously can be coupled under a condition of clearance, albeit minimum, with the opening 5.

In a further embodiment, such stem 40 - the profile of which is shown with a dashed line in figure 4 - might also not be present: in order for the device to operate, indeed it is sufficient for the central body 42 to abut with the abutment surface 40 of the work tool 2, and the operation thereof is the one of facilitating the execution of the manual operation in the passage from the engaged and unengaged positions.

The surface of the central body 42 also has a groove 43 at a given length, adapted to house a braking element 50, which advantageously is made of steel or elastic steel or of an elastomeric material, and preferably is ring- or C- shaped, which interacts by interference with the walls of the opening 5 and ensures the solidity of the coupling.

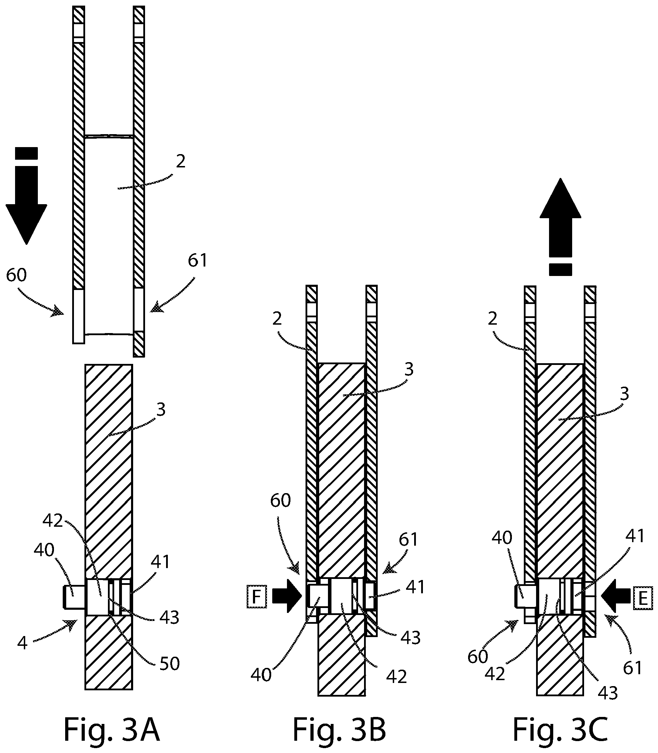

In reference to figures 3A to 3C, the work tool 2 is shown in the act of being positioned on the support element 3 (figure 3A) to better comprehend the operation of the fastening device 4; the fastening device 4 is in the released configuration and the head 41 thereof does not protrude from the opening 5, it being in its own seat. In this manner, the stem 40, which when present comes out of the opening 5 on the other face of the support element 3, can engage the surface 60 of the tool 2 up to the correct positioning thereof on the support element 3.

At this point, the operator can lock the work tool 2 by simply acting on the central body 42, or on the stem 40 when present, of the fastening device 4, thus moving it into the locked position (figure 3B) by exerting an axial force along the direction indicated by the arrow F such as to cause the sliding of the fastening device 4 along the opening 5 and the head 41 to occupy the respective seat, at the surface 61, on the work tool 2; in this manner, the head 41 abuts on the surface 61 and the work tool 2 can remain in locked position on the support element 3.

To pass from the released configuration (figure 3C), the farmer is only to repeat the same operation in inverse manner, applying a contrary force on the head 41 of the device 4, according to the direction of the arrow E; in this manner, the central body 42 abuts at the surface 60 and the work tool 2 can therefore slide on the support element 3 and be removed.

This excludes the possibility of accidental or unwanted release operations given that the sliding of the fastening device 4 in the opening 5 may be obtained only if an external operator exerts a direct force along the axis of said device 4 by means of a tool such as, for example hammers or mallets. Figure 5 shows certain embodiments of the surface 60 in order to better illustrate the functionality thereof: it is worth noting that it is sufficient for such surface 60 to have at least one interfering portion, also of minimum size, capable of overlapping the opening 5, at which the central body 42 of the device 4 can abut when the tool 2 is released.

The fact that the surfaces 60 and 61 are shaped so as to prevent the complete sliding, and therefore the fastening device 4 from coming out of its own seat, advantageously excludes the possibility of accidental releases and/or losses of the pin.

Moreover, a coupling system made according to the invention allows the operator to easily and quickly assemble and disassemble the various tools from the supports, regardless of the type of tools.

The features of the invention clearly emerge from the description, as do the advantages thereof.

Finally, the invention is described by way of example only, without limiting the scope of the application, according to its preferred embodiments, but it shall be understood that the invention may be modified and/or adapted by experts in the field without thereby departing from the scope of the appended claims.

## Claims

1. A utensil for agricultural working, comprising a work tool (2), a fastening device (4) and a support element (3) connected to said work tool (2), said work tool (2) comprising at least one shaped area (22, 32) designed to be positioned and reversibly connect with said support element (3) by inserting said fastening device (4) into a hole or opening (5) of the support element (3),
wherein said work tool (2) comprises, at said at least one shaped area (22, 32), respective abutment surfaces (60, 61) made on opposite parts of said work tool (2) which allow the insertion and accommodation of at least one portion of said fastening device (4) so that said fastening device (4) can slide in said opening (5), passing from a locked position to a released position and vice versa, allowing the locking or releasing, respectively, of said work tool (2) to/from said support element (3), wherein said fastening device (4) comprises:
- a head (41) and a central body (42), wherein said central body (42) has a larger section with respect to the section of said head (41);
**characterized in that**
the fastening device (4) further comprises
- a stem (40) connected to said central body (42), wherein said stem (40) has a smaller section with respect to the section of said central body (42), wherein said fastening device (4) remains inserted in said opening (5) both in an assembled position, according to which said work tool (2) is restrained to said support element (3), and in a non-assembled position, according to which said work tool (2) is released from said support element (3),
and wherein said head (41), in said locked position, abuts on a first of said abutment surfaces (61), and wherein said central body (42), in said released position, abuts on a second of said abutment surfaces (60).

2. A utensil for agricultural working according to claim 1, **characterized in that** said fastening device (4) is substantially a cylindrical-shaped pin.

3. A utensil for agricultural working according to at least one of the preceding claims, **characterized in that** said central body (42) comprises a groove (43) inside of which there is accommodated a braking element (50) adapted to interact by interference with said opening (5), thus ensuring coupling solidity between said fastening device (4) and said opening (5).

4. A utensil for agricultural working according to claim 3, **characterized in that** said braking element (50) is ring- or C-shaped and is made of steel, elastic steel, polymeric or elastomeric material.

5. A utensil for agricultural working according to one of the preceding claims, **characterized in that** said utensil is a subsoiler or scarifier adapted to break up the more or less deep layers of the soil.

6. A utensil for agricultural working according to at least one of the preceding claims, **characterized in that** a first of said abutment surfaces (60, 61) is slot-shaped to allow the insertion and removal of said tool (2) simply by sliding on said support element (3), also when said central body (42) abuts on said first abutment surface (60) and is in a released position.

7. A utensil for agricultural working according to one of the preceding claims, **characterized in that** at least a second of said abutment surfaces (60, 61) is made so as to allow the sliding of said tool (2) only when said head (41) of the fastening device (4) does not project from said opening (5), and therefore when said fastening device (4) is in released position. therefore when said fastening device (4) is in released position.

## Patentansprüche

1. Utensil zur landwirtschaftlichen Bearbeitung, das ein Arbeitswerkzeug (2), eine Befestigungsvorrichtung (4) und ein Tragelement (3), das mit dem Arbeitswerkzeug (2) verbunden ist, umfasst, wobei das Arbeitswerkzeug (2) mindestens eine gestaltete Fläche (22, 32) umfasst, die dazu ausgelegt ist, positioniert zu werden und sich umkehrbar mit dem Tragelement (3) durch Einsetzen der Befestigungsvorrichtung (4) in ein Loch oder eine Öffnung (5) des Tragelements (3) zu verbinden,
wobei das Arbeitswerkzeug (2) mindestens eine gestaltete Fläche (22, 32) umfasst, jeweilige Anschlagoberflächen (60, 61), die an entgegengesetzten Teilen des Arbeitswerkzeugs (2) hergestellt sind, die das Einsetzen und Aufnehmen mindestens eines Abschnitts der Befestigungsvorrichtung (4) derart erlauben, dass die Befestigungsvorrichtung (4) in der Öffnung (5) gleiten kann, indem sie von einer verriegelten Position zu einer freigegebenen Position und umgekehrt übergeht, indem das Verriegeln bzw. das Freigeben des Arbeitswerkzeugs (2) an/von dem Tragelement (3) erlaubt wird, wobei die Befestigungsvorrichtung (4) Folgendes umfasst:
- einen Kopf (41) und einen zentralen Körper (42), wobei der zentrale Körper (42) einen breiteren Querschnitt in Bezug auf den Querschnitt des Kopfes (41) aufweist;
**dadurch gekennzeichnet, dass** die Befestigungsvorrichtung (4) ferner Folgendes umfasst
- einen Stiel (40), der mit dem zentralen Körper (42) verbunden ist, wobei der Stiel (40) einen kleineren Querschnitt in Bezug auf den Querschnitt des zentralen Körpers (42) aufweist, wobei die Befestigungsvorrichtung (4) in der Öffnung (5) sowohl in einer zusammengefügten Position, gemäß der das Arbeitswerkzeug (2) an dem Tragelement (3) zurückgehalten ist, und in einer nicht zusammengefügten Position, gemäß der das Arbeitswerkzeug (2) von dem Tragelement (3) freigegeben ist, eingesetzt bleibt, und wobei der Kopf (41) in der verriegelten Position an eine erste der Anschlagoberfläche (61) anschlägt, und wobei der zentrale Körper (42) in der freigegebenen Position an eine zweite der Anschlagoberflächen (60) anschlägt.

2. Utensil zur landwirtschaftlichen Bearbeitung nach Anspruch 1, **dadurch gekennzeichnet, dass** die Befestigungsvorrichtung (4) im Wesentlichen ein zylindrisch gestalteter Stift ist.

3. Utensil zur landwirtschaftlichen Bearbeitung nach mindestens einem der vorstehenden Ansprüche, **dadurch gekennzeichnet, dass** der zentrale Körper (42) eine Nut (43) umfasst, in der ein Bruchelement (50) aufgenommen ist, das angepasst ist, durch Interferieren mit der Öffnung (5) in Wechselwirkung zu treten, wodurch Kopplungsfestigkeit zwischen der Befestigungsvorrichtung (4) und der Öffnung (5) sichergestellt ist.

4. Utensil zur landwirtschaftlichen Bearbeitung nach Anspruch 3, **dadurch gekennzeichnet, dass** das Bruchelement (50) ring- oder C-förmig ist und aus Stahl, elastischem Stahl, polymerem oder elastomerem Material hergestellt ist.

5. Utensil zur landwirtschaftlichen Bearbeitung nach einem der vorstehenden Ansprüche, **dadurch gekennzeichnet, dass** das Utensil ein Untergrundlockerer oder Aufreißer ist, der angepasst ist, um die mehr oder minder tiefen Schichten des Bodens aufzubrechen.

6. Utensil zur landwirtschaftlichen Bearbeitung nach mindestens einem der vorstehenden Ansprüche, **dadurch gekennzeichnet, dass** eine erste der Anschlagoberflächen (60, 61) schlitzförmig ist, um das Einsetzen und Entfernen des Werkzeugs (2) einfach durch Gleiten auf dem Tragelement (3) auch zu erlauben, wenn der zentrale Körper (42) an der ersten Anschlagoberfläche (60) anschlägt und in einer freigegebenen Position ist.

7. Utensil zur landwirtschaftlichen Bearbeitung nach einem der vorstehenden Ansprüche, **dadurch gekennzeichnet, dass** mindestens eine zweite der Anschlagoberflächen (60, 61) derart hergestellt ist, dass sie das Gleiten des Werkzeugs (2) nur erlaubt, wenn der Kopf (41) der Befestigungsvorrichtung (4) nicht aus der Öffnung (5) vorragt, und daher, wenn die Befestigungsvorrichtung (4) in einer freigegebenen Position ist.

## Revendications

1. Instrument pour les travaux agricoles, comprenant un outil de travail (2), un dispositif de fixation (4) et un élément de support (3) relié audit outil de travail (2), ledit outil de travail (2) comprenant au moins une zone façonnée (22, 32) conçue pour être positionnée et connectée de manière réversible avec ledit élément de support (3) en insérant ledit dispositif de fixation (4) dans un trou ou une ouverture (5) de l'élément de support (3),
dans lequel ledit outil de travail (2) comprend, au niveau de ladite au moins une zone façonnée (22, 32), des surfaces de butée respectives (60, 61) réalisées sur des parties opposées dudit outil de travail (2) qui permettent l'insertion et la réception d'au moins une partie dudit dispositif de fixation (4) de sorte que ledit dispositif de fixation (4) peut coulisser dans ladite ouverture (5), passant d'une position verrouillée à une position relâchée et vice versa, permettant le verrouillage ou la libération, respectivement, dudit outil de travail (2) sur/depuis ledit élément de support (3), dans lequel ledit dispositif de fixation (4) comprend:
- une tête (41) et un corps central (42), dans lequel ledit corps central (42) a une section plus grande par rapport à la section de ladite tête (41);
**caractérisé en ce que** le dispositif de fixation (4) comprend en outre
- une tige (40) reliée audit corps central (42), dans lequel ladite tige (40) a une section plus petite par rapport à la section dudit corps central (42), dans lequel ledit dispositif de fixation (4) reste inséré dans ladite ouverture (5) à la fois dans une position assemblée, selon laquelle ledit outil de travail (2) est retenu audit élément de support (3), et dans une position non assemblée, selon laquelle ledit outil de travail (2) est libéré dudit élément de support (3), et dans lequel ladite tête (41), dans ladite position verrouillée, bute sur une première desdites surfaces de butée (61), et dans lequel ledit corps central (42), dans ladite position libérée, bute sur une deuxième desdites surfaces de butée (60).

2. Instrument pour les travaux agricoles selon la revendication 1, **caractérisé en ce que** ledit dispositif de fixation (4) est sensiblement une broche de forme cylindrique.

3. Instrument pour les travaux agricoles selon au moins l'une des revendications précédentes, **caractérisé en ce que** ledit corps central (42) comprend une rainure (43) à l'intérieur de laquelle est logé un élément de freinage (50) adapté pour interagir par interférence avec ladite ouverture (5), assurant ainsi la solidité de l'accouplement entre ledit dispositif de fixation (4) et ladite ouverture (5).

4. Instrument pour les travaux agricoles selon la revendication 3, **caractérisé en ce que** ledit élément de freinage (50) est en forme d'anneau ou de C et est fait d'acier, d'acier élastique, de matériau polymère ou élastomère.

5. Instrument pour les travaux agricoles selon l'une des revendications précédentes, **caractérisé en ce que** ledit ustensile est une sous-soleuse ou un scarificateur adapté pour briser les couches plus ou moins profondes du sol.

6. Instrument pour les travaux agricoles selon au moins une des revendications précédentes, **caractérisé en ce qu'**une première desdites surfaces de butée (60, 61) est en forme de fente pour permettre l'insertion et le retrait dudit outil (2) par simple glissement sur ledit élément de support (3), également lorsque ledit corps central (42) est en butée sur ladite première surface de butée (60) et est dans une position relâchée.

7. Instrument pour les travaux agricoles selon l'une des revendications précédentes, **caractérisé en ce qu'**au moins une deuxième desdites surfaces de butée (60, 61) est réalisée de manière à permettre le coulissement dudit outil (2) uniquement lorsque ladite tête (41) du dispositif de fixation (4) ne fait pas saillie de ladite ouverture (5), et donc lorsque ledit dispositif de fixation (4) est en position relâchée.
